Europäisches Patentamt

European Patent Office

Office européen des brevets

(11) Veröffentlichungsnummer: **0 262 392**
**A2**

## (12) EUROPÄISCHE PATENTANMELDUNG

(21) Anmeldenummer: 87112364.2

(22) Anmeldetag: 26.08.87

(51) Int. Cl.⁴: **B30B 9/24**

(30) Priorität: 01.10.86 DE 3633396

(43) Veröffentlichungstag der Anmeldung:
06.04.88 Patentblatt 88/14

(84) Benannte Vertragsstaaten:
**AT BE CH DE ES FR GB GR IT LI LU NL SE**

(71) Anmelder: **NORDISCHER MASCHINENBAU
RUD. BAADER GMBH + CO KG
Geniner Strasse 249
D-2400 Lübeck(DE)**

(72) Erfinder: **Franke, Rolf
Bürgerweide 10
D-2400 Lübeck(DE)**

(54) **Einrichtung zum Abscheiden der fliessfähigen Bestandteile aus einem Stoffgemisch.**

(57) Es wird eine Einrichtung zum Abscheiden der fließfähigen Bestandteile aus einem Gemisch aus solchen und festen, insbesondere zum Aufbereiten von Lebensmitteln beschrieben. Dabei findet eine bekannte Preßpassiermaschine mit einem eine Lochtrommel 1 teilweise umschlingenden, mittels einer Preßwalze 5 an diese andrückbaren Preßband 8 Verwendung. Durch Ausbildung der Lochtrommel 1 mit einer nichtperforierten Mittelzone und Zuführung des Behandlungsgutes in den Bereich derselben gelingt es, den Trennprozeß zu optimieren. Das Behandlungsgut kann aus einem Fleisch-Sehnen/Knochen-Gemisch, zur Wurstherstellung, oder beispielsweise bei der Käse-oder Butterverpackung anfallenden Fehlpackungen bestehen.

Fig. 1

## Einrichtung zum Abscheiden der fließfähigen Bestandteile aus einem Stoffgemisch

Die Erfindung betrifft eine Einrichtung zum Abscheiden der fließfähigen Bestandteile aus einem Gemisch von solchen und festen, insbesondere zum Zwecke des Aufbereitens von Lebensmitteln, umfassend eine angetriebene, mit perforierter Mantelfläche versehene Lochtrommel, ein diese auf einem Teil ihres Umfanges umschlingendes und mindestens mittels einer Preßwalze an diese anpreßbares Preßband, sowie eine Zuführeinrichtung zum Zuführen des Behandlungsgutes in den zwischen der Lochtrommel und dem Preßband gebildeten Einlaufkeil.

Dem Erfindungsbetreff liegt das Grundkonzept eines Separatortyps zugrunde, welcher beispielsweise durch die DD-PS 96 155 offenbart ist. Das in eine solche Einrichtung eingebrachte Stoffgemisch aus fließfähigen und nicht fließfähigen Bestandteilen wird nach Aufgabe und Einzug in den Einzugskeil zwischen Lochtrommel und Preßband zunächst aufgrund des aus dessen axialer Spannung sich herleitenden radialen Andrucks an die Lochtrommel gedrückt und so der eigentlichen Preßstelle zugeführt. Diese wird durch eine, das Preßband stützende und gegen die Lochtrommel anstellbare Preßwalze gebildet, so daß ein Preßspalt einstellbar ist, in dem aufgrund der Elastizität des Preßbandes durch quasi hydraulischen Druck das Abfließen der fließfähigen Bestandteile durch die Perforation der Lochtrommel hindurch in das Innere derselben bewirkt wird. Die nicht fließfähigen Bestandteile durchlaufen demgegenüber den Preßspalt unter elastischer Einbettung in das Preßband und werden nachfolgend von dem Außenmantel der Lochtrommel abgestreift, soweit sie nicht bereits nach Freigabe durch den Preßspalt abgeworfen werden.

Solche Einrichtungen ermöglichen auf unkomplizierte Weise das Trennen des Fleisches von Sehnen, Knochen und Häuten, weshalb sie vornehmlich im Bereich der Wurstherstellung eingesetzt werden. Dabei zeigt sich aber, daß, je nach Beschaffenheit des Arbeitsgutes, insbesondere bei u. a. mit Knochensplittern versetzten Fleischteilen, ein wenn auch geringer Anteil solcher Splitter oder anderer Hartteile aufgrund ihrer Partikelgröße ungehindert durch die Durchbrüche der Lochtrommel hindurchzutreten vermögen, was auch mit Partikeln länglicher Ausdehnung geschieht, wenn diese unter radialer Ausrichtung zu der Lochtrommel in den Separator gelangen

Auch bei der naheliegenden Nutzung derartiger Einrichtungen zum Entpacken und Rückgewinnen fehlverpackter fließfähiger Nahrungsmittel, wie Käse, Butter u. ä., unter gleichzeitigem Trennen derselben von den Packstoffresten zeigen sich ähnliche Probleme, die sich in mangelhaftem Reinheitsgrad der rückgewonnenen Masse äußern. Das hat seine Ursache darin, daß die Durchbrüche gegenüber dem Preßband als Stanzmatrize wirken und die üblicherweise aus Metall, Kunststoff oder Papier bestehenden Verpackungs-oder Trennfolien je nach den physikalischen Eigenschaften ihres Werkstoffes zumindest über einzelne Durchbrüchen ausgestanzt werden mit der Folge, daß diese Teile mit der abfließenden Masse in das Innere der Lochtrommel geschwemmt werden. Aber auch bei Folien höherer Festigkeit tritt dieser Nachteil in Erscheinung, weil diese infolge des Preßdruckes in die Durchbrüche der Lochtrommel mit hineingedrückt werden, wobei die sich über den Durchbrüchen bildenden Packstoffmembranen zum Teil platzen. Die dabei in den Folien entstehenden Perforationen be wirken zwar zunächst keine Loslösung von Folienpartikeln, da die sich an den Perforationsstellen bildenden Folienzipfel mit der Strömung der abfließenden Nahrungsmittelmasse lediglich in die Durchbrüche hineingezogen werden, ohne abzureißen. Haben jedoch die Packstoffreste im weiteren Verlauf die Preßzone verlassen, so verharren sie in diesem Zustand aufgrund der formschlüssigen Verankerung in den Durchbrüchen sowie der allgemein wirksamen Adhäsionskräfte auf der Mantelfläche der Lochtrommel, so daß ein zwangsweises Abstreifen erfolgen muß. Die hierfür vorgesehene Einrichtung umfaßt ein Abstreifmesser, welches die Mantelfläche der Lochtrommel schabend berührt. Dabei wird nun ein Teil der in die Durchbrüche hineingezogenen Folienzipfel abgeschert, so daß diese im nächsten Umlauf mit der frisch abgepreßten Nahrungsmittelmasse in das Innere der Lochtrommel gespült werden und zur Verunreinigung der rückgewonnenen Masse führen.

Dieser Nachteil sollte mittels einer Einrichtung gemäß der DE-PS 32 11 625 behoben werden, wobei von der Überlegung ausgegangen wurde, daß das Abscheren dann vermeidbar ist, wenn durch Rückverlagerung der die Durchbrüche in der Lochtrommel ausfüllenden, als hydraulisches Medium anzusprechenden Masse ein Rückschwemmen der in die Durchbrüche gelangten Packstoffteile vor dem Abstreifen mittels des Abstreifmessers erfolgt. Die zu diesem Zweck vorgesehene hochelastische Innenwalze bewirkte auch diesen Effekt, doch zeigte sich eine Verschlechterung der Ausbeute, die einer Durchsetzung der Einrichtung aufgrund mangelnder Wirtschaftlichkeit im Wege stand.

Es ist daher die Aufgabe der Erfindung, eine Einrichtung vorzuschlagen, mit welcher eine bessere Trennung fließfähiger und fester Bestandteile eines Gemisches aus solchen Stoffen, insbesondere das Rückgewinnen, fehlverpackter viskoser Massen bei hoher Ausbeute und ohne Beeinträchtigung der Reinheit möglich ist.

Diese Aufgabe wird erfindungsgemäß dadurch gelöst, daß die Mantelfläche der Lochtrommel in ihrem Wirkbereich eine nicht perforierte Umfangszone aufweist, wobei die Zuführeinrichtung mindestens dem Mittenbereich der nicht perforierten Umfangszone zuweisend angeordnet ist. Dabei ist im Hinblick auf die Durchsatzleistung von Vorteil, wenn die Lochtrommel derart ausgeführt ist, daß die nicht perforierte Umfangszone das Mittelfeld der Lochtrommel umfaßt, an welches sich zu beiden Seiten perforierte Randzonen anschließen. Als den Abfluß der Masse begünstigend erweist sich, wenn das die nicht perforierte Umfangszone und die perforierten Randzonen überdeckende Preßband eine von der Mitte her zu den Rändern hin abnehmende Dicke aufweist. Dieser Effekt läßt sich auch erreichen, wenn der Wirkbereich der Lochtrommel als Doppelkegel ausgebildet ist, dessen größter Durchmesser in der Mitte der nicht perforierten Umfangszone vorgesehen ist.
Bei Einsatz der Einrichtung zum Rückgewinnen fehlverpackter viskoser Massen ist von Vorteil, wenn die dem Preßband zugekehrte Mantelfläche der Lochtrommel im Bereich ihrer nicht perforierten Umfangszone mit in die perforierten Randzonen hineinreichenden, im wesentlichen parallel zu der Achse der Lochtrommel verlaufenden Nuten versehen ist, da auf diese Weise vermieden wird, daß sich ein Massefilm auf der Mantelfläche der Lochtrommel aufbaut, auf dem das Verpackungsmaterial in den Bereich der per forierten Randzonen gleiten kann. Damit wird erreicht, daß die Packstoffolien im Bereich der nicht perforierten Umfangszone verbleibt, so daß die Gefahr der Durchstanzung und damit der Verunreinigung unterbunden wird.

Dieser Effekt kann noch dadurch verbessert werden, daß mindestens im Übergangsbereich zwischen der nicht perforierten Umfangszone und den perforierten Randzonen Radialnuten vorgesehen sind, wobei das Tiefenmaß der Nuten größer sein sollte als das der Radialnuten.

Die Einrichtung wird nachfolgend anhand der Zeichnung näher erläutert.

Es zeigt

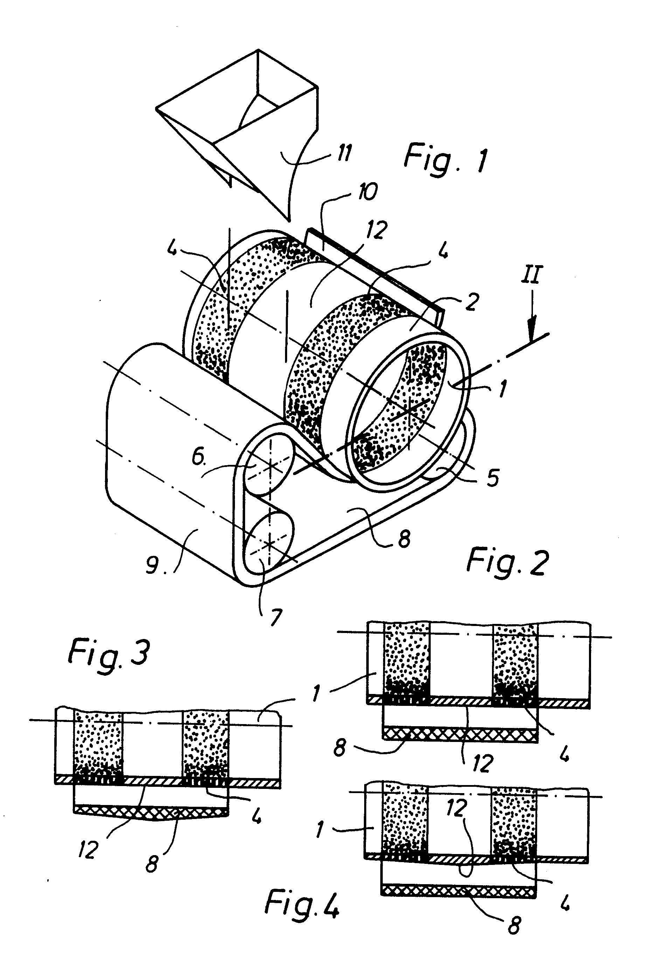

Fig. 1 eine Gesamtansicht der Einrichtung in axonometrischer Darstellung mit einer Zuführeinrichtung in Explosionsanordnung,

Fig. 2 einen Querschnitt durch die Lochtrommel entlang der Schnittlinie II ,

Fig. 3 einen Querschnitt entsprechend Fig. 2 mit einem modifizierten Preßband,

Fig. 4 einen Querschnitt entsprechend Fig. 2 mit einer modifierten Lochtrommel,

Fig. 5 einen Ausschnitt aus der Lochtrommel in axonometrischer Darstellung.

In einem nicht dargestellten Gestell einer in bekannter Weise ausgeführten Passiermaschine sind zwischen ebenfalls nicht gezeigten Seitenwänden eine Lochtrommel 1 mit zylindrische Zonen ihrer Mantelfläche 2 durchsetzenden Durchbrüchen 4, eine inbezug auf ihre Lage zu der Mantelfläche 2 einstellbare Preßwalze 5 , sowie eine Umlenkwalze 6 und eine Spannwalze 7 gelagert. Während die letztgenannten lose mitlaufend ausgeführt sind, sind die Lochtrommel 1 und die Preßwalze 5 mit zumindest annähernd gleicher Umfangsgeschwindigkeit umlaufend angetrieben. Die Walzen 5, 6 und 7 tragen ein zwischen den Seitenwänden spielfrei umlaufendes flexibles Preßband 8 , welches die Lochtrommel 1 auf einem Teil ihres Umfanges umschlingt und unter Andruck seiner durch beispielsweise Kordelung griffig gemachten Außenfläche 9 gegen die Mantelfläche 2 der Lochtrommel 1 mittels der Preßwalze 5 auf einen Bruchteil seiner Dicke zusammenpreßbar ist. In Drehrichtung der Lochtrommel 1 hinter der Preßwalze 5 ist eine auf engsten Spalt zu der Mantelfläche 2 der Lochtrommel 1 anstellbare Abstreifvorrichtung 10 mit mindestens einem Abstreifmesser angeordnet. Oberhalb des durch das Preßband 8 und die Lochtrommel 1 gebildeten Einzugskeiles befindet sich eine Zuführeinrichtung 11 , welche das Zuführen des Preßgutes in die nicht mit Durchbrüchen 4 versehene, hier in eine mittig angeordnete Umfangszone 12 , zuläßt.

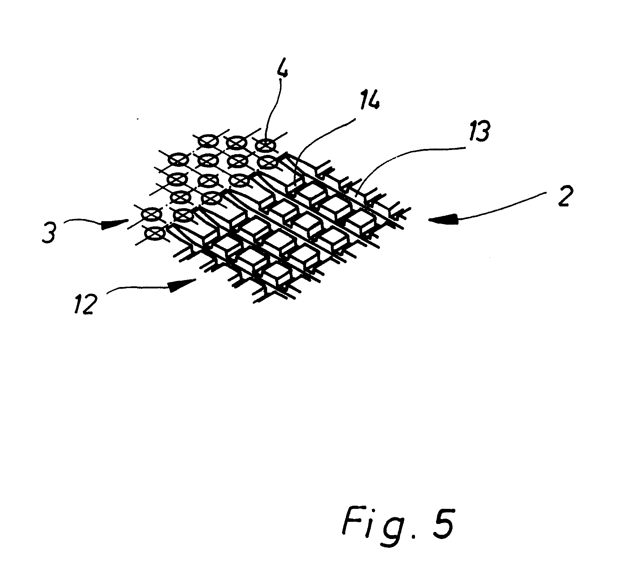

Die Wirkungsweise der Einrichtung ist folgende:
Das über die Zuführeinrichtung 11 in den Einzugskeil zwischen Preßband 8 und Lochtrommel 1 eingebrachte Behandlungsgut wird aufgrund des Umlaufes dieser beiden Teile in den Umschlingungsbereich zwischen Lochtrommel 1 und Preßband 8 eingezogen und zunächst unter der sich aus der Spannung des Preßbandes 8 ergebenden radialen Andrückkomponente mit Druck beaufschlagt. Infolge der in dem Beschickbereich der Lochtrommel 1 fehlenden Perforation der Mantelfläche 2 derselben wird hierdurch das Behandlungsgut zu einem Masseband umgeformt, dessen fließfähige Bestandteile beginnen, in Richtung des einzig verbleibenden Ausweges, nämlich längs der Mantellinien der Lochtrommel 1 zu fließen. Dabei erleichtern die gemäß Fig. 5 im Bereich der nicht perforierten Umfangszone 12 der Lochtrommel 1 angeordneten Nuten 13 den Abfluß der Masse in die perforierten Randzonen 3 mit der Folge, daß der Aufbau eines Gleitfilms vermieden wird, der die Gefahr mitsichbringt, daß die Packstoffolien in den Bereich der perforierten Randzonen 3 gelangen und dort durch das Preßband 8 über den Durchbrüchen 4 ausgestanzt werden. Dieser Gefahr wirken auch die Radialnuten 14 entgegen, die eine formschlüssige Haftung zwischen Packfolien und Lochtrommel 1 bewirken, ohne daß dank der größeren Tiefe der Nuten 13 der Abfluß der ausgepreßten Masse behindert wird. Während also durch die zwischen der Lochtrommel 1 und dem Preßband 8 wirksame Klemmkraft die festen Bestandteile des Behandlungsgutes eingeklemmt gehalten werden, fließen so die fließfähigen Bestandteile den perforierten Randzonen 3 zu und spätens bei Erreichen der eigentlichen Preßzone im Bereich der Preßwalze 5 durch die Durchbrüche 4 in das Innere der Lochtrommel 1 ab.

Um den Abfluß der fließfähigen Bestandteile und gleichzeitig das Rückhalten der festen zu begünstigen, kann das Preßband 8 ein von der Mittellinie zu den Randbereichen abnehmendes Dickenmaß aufweisen, wobei die mit dem Behandlungsgut in Kontakt tretende Außenfläche 9 des Preßbandes 8 in ebener und die den Walzen 5, 6 und 7 zugekehrte Innenfläche in dachförmiger Ausführung zu bevorzugen ist. Dabei wird die zylindrische Gestalt der Preßwalze 5 beibehalten, während die Umlenkwalze 6 und die Spannwalze 7 eine der Form der Innenfläche des Preßbandes 8 angepaßte Ausgestaltung ihrer Umfangsfläche erfahren. Auf diese Weise bildet sich im Mittelbereich des Preßbandes 8 eine Zone höheren Druckes, der jeweils zu dessen Randbereichen hin abnimmt.

Mit dem gleichen Effekt kann die Lochtrommel 1 als Doppelkegel mit in der Mitte ihrer Arbeitsfläche größtem Durchmesser ausgebildet sein.

## Liste der benutzten Bezeichnungen

1 Lochtrommel
2 Mantelfläche
3 Randzone
4 Durchbruch
5 Preßwalze
6 Umlenkwalze
7 Spannwalze
8 Preßband
9 Außenfläche
10 Abstreifvorrichtung
11 Zuführeinrichtung
12 Umfangszone
13 Nut
14 Radialnut

## Ansprüche

1. Einrichtung zum Abscheiden der fließfähigen Bestandteile aus einem Gemisch von solchen und festen, insbesondere zum Zwecke des Aufbereitens von Lebensmitteln, umfassend eine angetriebene, mit perforierter Mantelfläche versehene, ein diese auf einem Teil ihres Umfanges umschlingendes und mindestens mittels einer Preßwalze an diese anpreßbares Preßband, sowie eine Zuführeinrichtung zum Zuführen des Behandlungsgutes in den zwischen der Lochtrommel und dem Preßband gebildeten Einlaufkeil, **gekennzeichnet dadurch,** daß die Mantelfläche (2) der Lochtrommel (1) in ihrem Wirkbereich eine nicht perforierte Umfangszone (12) aufweist.

2. Einrichtung nach Anspruch 1 , **gekennzeichnet dadurch,** daß die Zuführeinrichtung (11) mindestens dem Mittenbereich der nicht perforierten Umfangszone (12) zuweisend angeordnet ist.

3. Einrichtung nach den Ansprüchen 1 oder 2 , **gekennzeichnet dadurch,** daß die nicht perforierte Umfangszone (12) das Mittelfeld der Lochtrommel (1) umfaßt, an welches sich zu beiden Seiten perforierte Randzonen (3) anschließen.

4. Einrichtung nach einem der Ansprüche 1 bis 3 , **gekennzeichnet dadurch,** daß das die nicht perforierte Umfangszone (12) und die perforierten Randzonen (3) überdeckende Preßband (8) eine von der Mitte her zu den Rändern hin abnehmende Dicke aufweist.

5. Einrichtung nach einem der Ansprüche 1 bis 3 , **gekennzeichnet dadurch,** daß der Wirkbereich der Lochtrommel (1) als Doppel kegel ausgebildet ist, dessen größter Durchmesser in der Mitte der nicht perforierten Umfangszone (12) vorgesehen ist.

6. Einrichtung nach einem der Ansprüche 1 bis 5 , **gekennzeichnet dadurch,** daß die dem Preßband (8) zugekehrte Mantelfläche (2) der Lochtrommel (1) im Bereich ihrer nicht perforierten Umfangszone (12) mit in die perforierten Randzonen (3) hineinreichenden, im wesentlichen parallel zu der Achse der Lochtrommel (1) verlaufenden Nuten (13) versehen ist.

7. Einrichtung nach Anspruch 6 , **gekennzeichnet dadurch,** daß mindestens im Übergangsbereich zwischen der nicht perforierten Umfangszone (12) und den perforierten Randzonen (3) Radialnuten (14) vorgesehen sind.

8. Einrichtung nach den Ansprüchen 6 oder 7 , **gekennzeichnet dadurch,** daß das Tiefenmaß der Nuten (13) größer ist als das der Radialnuten (14).

0 262 392

Fig. 1

Fig. 2

Fig. 3

Fig. 4

Fig. 5